Europäisches Patentamt

European Patent Office

Office européen des brevets

(19)

(11) Publication number: 0 329 332
A2

(12) EUROPEAN PATENT APPLICATION

(21) Application number: 89301224.5

(22) Date of filing: 09.02.89

(51) Int. Cl.⁴: C08L 83/04 , C08K 3/22 , C08K 3/00 , C08K 3/36

(30) Priority: 11.02.88 US 154827
22.11.88 US 274871

(43) Date of publication of application:
23.08.89 Bulletin 89/34

(84) Designated Contracting States:
DE FR GB IT NL

(71) Applicant: DOW CORNING CORPORATION

Midland Michigan 48640(US)

(72) Inventor: Buch, Robert Raymond
1812 Brookfield
Midland Michigan(US)
Inventor: Cabey, Melvin Anthony
5212 Huntington
Midland Michigan(US)
Inventor: Monroe, Carl Morrison
5207 Cortland
Midland Michigan(US)

(74) Representative: Lewin, John Harvey et al
ELKINGTON AND FIFE Beacon House 113
Kingsway
London WC2B 6PP(GB)

(54) Flame-retardant organosiloxane elastomer compositions exhibiting reduced smoke evolution during combustion and method for preparing same.

(57) Both the flammability and the amount of smoke generated during combustion of cured silicone elastomers prepared from a silica-reinforced gum-type polydiorgano-siloxane, an aromatic peroxide or peroxyester and a platinum-group metal or a compound thereof as the flame retarding agent are substantially reduced when the composition contains at least 40 parts by weight of hydrated alumina, at least one magnesium compound, or combinations of these additives. Finely divided quartz can comprise a portion of the additive so long as the total concentration of additive is at least 40 parts by weight and the combined weights of the hydrated alumina and magnesium compound constitutes at least 10 parts by weight per 100 parts of silica-reinforced polydior-ganosiloxane.

# FLAME-RETARDANT ORGANOSILOXANE ELASTOMER COMPOSITIONS EXHIBITING REDUCED SMOKE EVOLUTION DURING COMBUSTION AND METHOD FOR PREPARING SAME

This invention relates to curable organosiloxane elastomer compositions. More particularly, this invention relates to curable organosiloxane compositions containing a conventional platinum-based flame retardant in addition to a combination of inorganic compounds that reduces both the rate of flame spread and the amount of smoke generated during combustion of the cured elastomer. The compositions are particularly useful as insulation and jacketing for electrical and optical fiber cables.

With increasing recognition of the toxic and corrosive nature of the smoke generated during combustion of halogenated polymers such as polyvinyl chloride and polytetrafluoroethylene and proposed legislation restricting the use of these materials in certain applications there is a need for materials that generate lower amounts of less toxic combustion by-products.

Polytetrafluoroethylene is presently the only material approved for use as insulation on electrical cables installed in the plenum areas of buildings. This approval requires meeting strict limits on the distance of flave travel and amount of smoke generated during combustion. Silicone elastomers generate considerably less toxic by-products during combustion than polytetrafluoroethylene, and in this respect would be desireable materials to replace this and other halogenated organic polymers if it were possible to decrease the rate of flame spread and the amount of smoke generated by these elastomers.

The present inventors undertook an investigation of various additives for reducing both the rate of flame spread and the amount of smoke generated during combustion of peroxide cured silicone elastomer compositions containing a platinum group metal or a compound thereof as a flame-retarding agent.

An objective of this invention is to provide gum-type organosiloxane compositions that cure in the presence of an organic peroxide to yield elastomers exhibiting a low rate of flame spread and low smoke evolution during combustion.

The rate of flame spread and the amount of smoke generated during combustion of a cured silicone elastomer composition prepared from a silica-reinforced polydiorganosiloxane gum, an aromatic peroxide and a platinum-group metal or compound thereof are both substantially reduced when the composition contains at least 40 parts by weight, based on the weight of polydiorganosiloxane gum and reinforcing silica filler, of hydrated alumina, magnesium compounds, a mixture of hydrated alumina and at least one magnesium compound, or a mixture of quartz and at least one magnesium compounds and/or hydrated alumina, where the combined concentration of hydrated alumina and magnesium compounds in the mixture constitutes at least 10 percent by weight of the additive.

This invention provides an improved peroxide-curable organosiloxane elastomer composition comprising 100 parts by weight of a silica-reinforced polydiorganosiloxane gum, an amount of an aromatic peroxide or peroxyester sufficient to cure said composition to an elastomer and an amount of a platinum-group metal or compound thereof sufficient to impart flame retardancy to said elastomer. The improvement comprises the presence in said composition of at least 40 parts by weight, based on the weight of said gum, of an additive to reduce both the flame spread rate and the amount of smoke generated during combustion of the elastomer, said additive being selected from

A. hydrated alumina
B. at least one magnesium compound,
C. mixtures of hydrated alumina and at least one magnesium compound, and
D. mixtures of A, B or & and finely divided-quartz, where the combined concentrations of A and B is at least 10 parts by weight.

Preferably, the concentration of said additive is from 40 to 90 parts by weight per 100 parts of said gum.

This invention also provides a method for reducing the amount of smoke generated during combustion of organo-siloxane elastomers that have been prepared by curing a silica-reinforced polyorganosiloxane gum in the presence of an organic peroxide or peroxyester and a platinum-based flame retardant. The method comprises including in the curable composition at least 40 parts by weight per 100 parts of silica-reinforced polyorganosiloxane gum of one of the present additives defined hereinbefore.

The inventive feature of the present compositions resides in the ability of hydrated alumina, magnesium compounds and mixtures of these compounds either alone or in combination with finely divided quartz to suppress both flame spread and smoke evolution when used at a concentration of at least 40 parts by weight per 100 parts of silica-reinforced polyorganosiloxane gum.

Preferred compositions of this invention will substantially eliminate visible smoke evolution in addition to substantially reducing the rate of flame spread of gum-type polyorganosiloxane elastomers.

Many additives, including those of this invention when used at less than the present levels, will reduce flame spread or smoke evolution in peroxide-cured silicone elastomer compositions. While it may appear obvious that a reduction in the amount of smoke evolved always accompanies a reduction in burning rate, data in the accompanying examples demonstrate the error of this assumption.

Any of the available hydrated aluminas can be used in the present compositions. A preferred type of alumina contains three molecules of water associated with each molecule of oxide, $Al_2O_3 \bullet 3H_2O$ and is referred to as "aluminum trihydrate" or ATH. The concentration of this ingredient is typically at least 10 percent by weight when used in combination with at least one magnesium compound and/or finely divided quartz, or at least 40 parts by weight when used as the sole flame retarding additive in combination with a platinum compound. The same concentration limits apply to the magnesium compounds that are described in greater detail in the following paragraphs. The combined concentration of hydrated alumina and the magnesium compound can tctal up to 90 parts by weight or more per 100 parts by weight of the silica-filled polyorganosiloxane gum.

Unless specified otherwise the concentration limits of this invention are based on the weight of the polydiorganosiloxane gum and reinforcing silica filler. The combination of these two ingredients is often referred to as a silicone elastomer "base".

The non-metallic portion of the magnesium compound that can be used alone or in combination with hydrated alumina and/or finely divided quartz in accordance with the present invention is not critical so long as it 1) does not adversely affect either curing of the composition or operability of the platinum-based flame retardant or 2) does not generate toxic and/or corrosive by-products during combustion. Compounds containing halogen or sulfur and salts of amines or strong acids such as phosphoric and nitric acids should therefore be avoided.

Examples of suitable magnesium compounds include but are not limited to the hydroxides, oxides, carbonates, borates, silicates and salts of carboxylic acids such as acetic acid.

Magnesium oxide and magnesium hydroxide are particularly effective in reducing the amount of smoke generated during combustion of peroxide or peroxyester cured silicone elastomers when used alone or in combination with hydrated alumina and/or quartz and, therefore, represent preferred embodiments of the present compositions.

The third ingredient of the present flame and smoke reducing additives is a finely divided quartz that can be present in amounts up to about 60 percent by weight, based on the silicone rubber base. The average particle size of the quartz is typically from about 5 up to about 50 microns. A range of from 5 to about 40 microns is preferred because quartz of this type is particularly effective in reducing the rate of flame spread during combustion of the composition.

Because quartz may increase the amount of smoke generated during combustion of the polyorganosiloxane elastomer composition, it may be desirable to increase the concentrations of platinum-based flame retardant, hydrated alumina and magnesium compound when quartz is present. The level of quartz is preferably from 10 to about 50 weight percent, based on the total weight of the curable composition.

When quartz is present in the composition the total concentration of hydrated alumina and/or the magnesium compound must be at least 10 parts by weight per 100 parts of silica-reinforced polydiorganosiloxane and the combination of these compounds with finely divided quartz must constitute at least 40 percent of the weight of the silica-filled polydiorganosiloxane. As discussed hereinbefore, either the hydrated alumina or the magnesium compound can be used alone or as mixtures with one another.

When the combined concentrations of hydrated alumina, magnesium compound and optional quartz is less than 40 parts by weight per 100 parts of silica-filled elastomer base the flame spread rating may be erratic and not reproducible. In addition, when no quartz is present these performance parameters will vary depending upon the relative amounts of hydrated alumina and magnesia present. While the level of smoke may be within the limits of the present invention, the flammability, expressed in terms of the rate of flame spread, is higher than the flamability of the present compositions.

Above a level of about 90 parts by weight the present additives may adversely affect the physical properties of the cured elastomer, particularly tensile strength and elongation, to the extent that the elastomer may no longer be suitable for the intended end use application.

As used in this specification, the terms "flame spread rating" and smoke level are determined using an oxygen consumption calorimeter of the type described in proposed ASTM test method P 190, published by Committee E-5 on Fire Standards of the American Society of Testing and Materials (ASTM). The instrument is manufactured by Custom Scientific Instruments, Cedar Knolls, NJ.

The calorimeter consists of a combustion chamber in which the sample is ignited while exposed to a predetermined heat flux generated by an electrically powered incandescent heater positioned 2.5 cm. above

3

the sample. The sample is mounted on a load cell which allows the weight of the sample to be monitored during the combustion process. The optical density of the smoke generated during combustion of the sample is determined using a helium-neon laser mounted in the exhaust system of the instrument.

In addition to the aforementioned hydrated alumina, magnesium compounds and quartz, the present compositions include any of the platinum-group metals and compounds of these metals known to impart flame retardancy to cured organosiloxane elastomers. These flame retardants can be present in any unsupported form that can be homogeneously dispersed into the curable composition. Suitable unsupported forms of platinum-group metals and compounds thereof include but are not limited to the readily dispersible compounds of platinum, rhodium and complexes of these compounds that are well known in the art. Illustrative of readily dispersible platinum-containing materials are finely divided platinum metal and compounds wherein platinum is bonded to one or more halogen atoms and, optionally, one or more hydrocarbon radicals and/or alkoxy groups.

Specific examples of suitable platinum compounds include but are not limited to chloroplatinic acid, platinum chlorides, platinum bromides and complexes of chloroplatinic acid with organic and organosilicon compounds containing ethylenically unsaturated hydrocarbon radicals. Complexes of chloroplatinic acid with vinyl-substituted organosiloxanes are particularly preferred platinum-based flame retardants for the present elastomer compositions.

The concentration of platinum group metal or compound thereof is equivalent to a platinum group metal content of at least 20 parts per million by weight of the aforementioned silicone elastomer base. Below this limit, it may not be possible to reproducibly achieve the low levels of flame spread and smoke evolution that characterize the products of this invention. The platinum-group metal is preferably platinum.

The peroxide-curable silicone elastomer bases into which the flame and smoke reducing additives of this invention are incorporated typically include a high molecular weight polydiorganosiloxane, a reinforcing silica filler and an organic peroxide or peroxyester as the curing agent. These compositions can also contain a low molecular weight silanol-functional liquid silane, organosiloxane or hydrolyzable precursor as a treating agent for the silica. The purpose of the treating agent is to prevent a phenomenon referred to by those skilled in the art as "creping" or "crepe hardening", which can result in a considerable increase in the viscosity of a curable elastomer composition during processing. Suitable anti-crepe hardening agents include low molecular weight hydroxyl terminated polydiorganosiloxanes and hexaorganodisilazanes.

The polydiorganosiloxane exhibits a consistency ranging from a high viscosity liquid to a non-flowing soluble gum that is characterized by a Williams plasticity value of from 0.040 to 0.1 inch as measured by the American Society of Testing and Materials (ASTM) test method No. D-926-67. The term "soluble" implies that the gum can be dissolved in benzene or toluene. The polydiorganosiloxane molecules consist essentially of substantially linear chains formed from one or more types of diorganosiloxane units. The organic groups bonded to the silicon atoms are typically monovalent hydrocarbon radicals or substituted monovalent hydrocarbon radicals. These hydrocarbon radicals can contain from 1 up to about 10 carbon atoms and include but are not limited to methyl, ethyl, propyl, vinyl, phenyl and 3,3,3-trifluoropropyl radicals. The ratio of these hydrocarbon radicals to silicon atoms is typically from 1.98 to 2.01.

At least one of the hydrocarbon radicals in each of the diorganosiloxane units is typically methyl and the other hydrocarbon radical is preferably methyl, phenyl, vinyl or 3,3,3-trifluoropropyl.

Examples of suitable polydiorganosiloxanes that can be used individually or in combination in the present curable elastomer compositions include polydimethylsiloxanes, polyphenylmethylsiloxanes and polymethyl-3,3,3-trifluoropropylsiloxanes. When the polydiorganosiloxane contains vinyl or other ethylenically unsaturated hydrocarbon radicals, these constitute up to 2 percent and preferably less than 1 percent of the total number of silicon-bonded hydrocarbon radicals.

The terminal units of the polydiorganosiloxane molecules can be silanol or triorganosiloxy, where the organic substituents are members of the same group that are present on the repeating units.

Polydiorganosiloxanes suitable for use in the present curable compositions are well known in the art and can be prepared by any suitable method that will yield hydroxyl or triorganosiloxy-terminated polymers. Many of these polydiorganosiloxanes are commercially available. It will be understood that while these materials are characterized as linear molecules they can contain trace concentrations of monoorganosiloxy and $SiO_{4/2}$ units that can result in chain branching.

In addition to the aforementioned polydiorganosiloxane, the curable silicone elastomer base also contain a reinforcing silica filler to improve the physical properties of the cured elastomer. Reinforcing silica fillers have a surface area of from about 50 to 400 $m^2$ per gram or higher. The silica is typically of the precipitated or fume type. The silica can be untreated prior to being combined with the other ingredients of the curable composition or it can be pretreated with one or more of the aforementioned anti-crepe hardening agents. Depending upon the physical properties desired in the cured elastomer, the curable composition contains

4

from 10 to 100 weight percent of reinforcing filler based on the weight of polydiorganosiloxane(s), preferably from 20 to 60 weight percent.

The present compositions are cured using an aromatic peroxide or peroxyester that decomposes to yield free radicals at temperatures above about 100° C. Useful curing agents include benzoyl peroxide, t-butylcumyl peroxide and 2,4-dichlorobenzoyl peroxide. This class of curing agents is referred to as "non-vinyl specific peroxides". Vinyl-specific peroxides and peroxyesters typically contain aliphatic hydrocarbon radicals and are not desirable for use in the present compositions because they appear to interfere with the smoke suppressing ability of these compositions. The concentration of aromatic peroxide or peroxyester is typically from 1 to 10 weight percent, preferably from 0.5 to 5 weight percent, based on the weight of the polydiorganosiloxane(s).

The compositions of this invention are prepared by any suitable means that will produce a homogeneous mixture of the various ingredients. Methods of blending that are common in the silicone rubber art and suitable for this invention include mixing the ingredients in a dough-type mixer, Banbury mixer or on a rubber compounding mill. The order in which the ingredients are added to the mixer in usually not critical. In a typical preparation the polydiorganosiloxane, reinforcing silica filler and any anti-crepe additives used to treat the filler are blended to homogeneity, after which the curing agent together with any extending filler are added and the mixing operation is continued at room temperature until a homogeneous composition is produced. Any additional additives such as flame retardants, pigments and heat stabilizers are added prior to the aromatic peroxide or peroxyester.

The polyorganosiloxane composition is cured by any means that will cause decomposition of the peroxide or peroxyester. This typically involves heating of the composition to temperatures of between 110 to 175° C., depending upon the decomposition temperature of the peroxide or peroxyester. The heating period is a function of the thickness of the material to be cured and the method used to fabricate the material.

The following examples demonstrate the combination of low smoke evolution and low rate of flame spread that is achieved using the compositions of this invention.

Example 1

The samples used to evaluate flame spread and smoke generation were prepared by blending the ingredients of the composition to be evaluated on a two-roll mill under ambient conditions until a sheet of homogeneous composition formed around one of the rollers. The sheet was then removed from the mill. Slabs measuring 0.25 inch (0.64 cm.) were molded for between 15 and 20 minutes using a hydraulic press heated to a temperature of 116° C. Samples measuring 10 by 10 cm. were cut from this slab.

The peroxide-curable organosiloxane elastomer compositions evaluated contained one of several different silica-reinforced silicone rubber bases defined in the accompanying tables as A, B, & and D in addition to the specified amounts of hydrated alumina, magnesium oxide, magnesium hydroxide and quartz. These amounts being expressed as parts by weight per 100 parts of base. Some of the compositions contained titanium dioxide.

Composition A

100 parts of a gum-type dimethylvinylsiloxyterminated polydimethylsiloxane, and
37 parts of a reinforcing silica filler treated with 25 weight percent, based on the silica, of liquid hydroxyl-terminated polydimethylsiloxane.

Composition B

100 parts of a gum-type dimethylvinylsiloxy terminated polydimethylsiloxane,
3 parts of a dimethylvinylsiloxy terminated diorganosiloxane copolymer containing 78 mole percent dimethylsiloxane units, 22 mole percent methylvinylsiloxane units and exhibiting a viscosity of about 15 Pa•s at 25° C., and
52 parts of a reinforcing silica treated with 2 weight percent water, 20 weight percent hexamethyldisilazane and 2 weight percent hydroxyl-terminated polydimethylsiloxane, based on silica.

## Composition C

100 parts of a gum-type dimethylsiloxane/methyl vinylsiloxane copolymer containing 0.14 mole percent methylvinylsiloxane units, and

37 parts of a reinforcing silica filler treated with 19 weight percent, based on silica of a hydroxylterminated polymethylphenylsiloxane and 4 weight percent of a hydroxy-terminated dimethylsiloxane/methylvinylsiloxane copolymer containing l2 weight percent of vinyl radicals and a degree of polymerization of between 8 and 10.

## Composition D

100 parts of a gum-type dimethylvinylsiloxy terminated copolymer containing 92.5 mole percent dimethylsiloxane units, 7.5 mole percent phenylmethylsiloxane units and 0.14 mole percent methylvinylsiloxane units,

3 parts of a dimethylvinylsiloxy terminated diorganosiloxane copolymer containing 78 mole percent dimethylsiloxane units, 22 mole percent methylvinylsiloxane units and exhibiting a viscosity of about 15 Pa•s at 25°C., and

54 parts of a reinforcing silica treated with 2 weight percent, based on silica, of a hydroxyl-terminated polydimethylsiloxane, 18 weight percent hexamethyldisilazane and 9 weight percent water.

Unless otherwise indicated, all of the compositions contained 100 parts by weight of the base, the amounts of additives listed in the accompanying tables and 1.5 parts of 2, 4-dichlorobenzoyl peroxide as the curing agent.

The additive referred to as "Pt Cmpd." is a reaction product of hexachloroplatinic acid and sym-tetramethyldivinyldisiloxane that has been diluted with a liquid dimethylvinylsiloxy terminated polydimethylsiloxane in an amount sufficient to achieve a platinum content of 0.7 weight percent.

Hydrated alumina ($Al_2O_3$•$3H_2O$) is represented as ATH and is available as Hydral 710 from the Aluminum Company of America and the magnesium hydroxide was a technical grade material obtained from the Dow Chemical Company. Unless indicated to the contrary, the quartz exhibited an average particle size of 5 microns.

The rate at which the samples burned and the amount of smoke generated during combustion of each sample were measured in accordance with the procedure described in proposed test method P 190, published by Committee E-5 on Fire Standards of the American Society of Testing and Materials (ASTM). The apparatus used to evaluate the samples was an oxygen consumption calorimeter of the type described in the aforementioned proposed ASTM test method and manufactured by Custom Scientific Instruments, Cedar Knolls, NJ.

The calorimeter consists of a combustion chamber in which the sample is ignited while exposed to predetermined heat flux generated by an electrically powered conical incandescent heater positioned 2.5 cm. above the sample. The sample is mounted on a load cell which allows the weight of the sample to be monitored during the combustion process.

Prior to insertion of the test sample into the combustion chamber the conical heater is energized to produce a heat flux of 60 kilowatts per square meter at the sample surface. When equilibrium conditions are established within the combustion chamber the test sample is covered with a metal heat shield to prevent premature ignition and positioned in the combustion chamber. Combustion of the sample is initiated by removing the heat shield and igniting the vapors generated by the heated sample by means of an electric arc located 1.3 cm. above the surface of the sample. The electric arc is actuated between 2.5 and 3.5 seconds following removal of the heat shield. The time interval between removal of the heat shield and the observation of constant combustion on the sample is measured and is referred to as the time to ignition ($t_{ig}$)

The smoke generated during combustion of the sample is drawn into the exhaust duct of the calorimeter by means of a heat-resistant blower located within the duct. The speed of the blower is controlled to produce a flow rate of about 100 cubic feet of gases per minute through the duct.

The optical density of the smoke evolved during the combustion process is determined by directing the beam from a helium-neon laser across the exhaust duct and measuring the intensity of the light emerging from the smoke stream by means of two silicon photodiodes, one of which is positioned to measure the intensity of the light passing through the smoke stream and the second serving as a reference. The specific extinction value, $k_{sp}$, expressed in units of square meters per second, is then calculated using equation (1)

$$(1) \qquad k_{sp} = \frac{k\dot{V}}{\dot{m}_B{''}}$$

where $\dot{V}$ represents the volumetric flow rate in the exhaust duct, expressed in cubic meters/second; k is the extinction coefficient and is equal to 1/L ln(I0/I), where L represents the length of the light path across the flue passage, $I_0$ is the initial intensity of the laser beam, I is the intensity of the beam emerging from the smoke stream, In represents the natural logarithm; and $\dot{m}_B{''}$ is the mass burning rate, expressed in kg/second unit area.

The extinction coefficient of the smoke generated by the burning sample was measured during the entire combustion period. The extinction coefficients were converted to specific extinction values using the foregoing formula. The specific extinction values obtained during combustion of a given sample are reported in the following examples.

The rate of flame spread for the compositions was calculated from the external heat flux ($\dot{Q}_{ext}{''}$),

in units of kilowatts /m² generated by the conical heater, which is determined using a calibrated Gardon gauge and the time interval ($t_{ig}$) between initial exposure of the sample to the unshielded heat flux eminating from the cone heater and ignition of the sample by vapors previously ignited by firing of the electric arc. By expressing the kilowatt portion of the heat flux units as the equivalent in kilojoules per second and multiplying this by $t_{ig}$, the seconds units cancel one another and the result is defined as ignition energy ($E_{ig}$) and is expressed in units of kilojoules/m². $E_{ig}$ is a measure of the amount of heat required to produce a concentration of flammable vapors over an area of one square meter to result in flame propagation. The reciprocal of $E_{ig}$ is a measure of the rate of flame spread for the sample. This number multiplied by $10^4$ appears as the flame spread rating (FSR) in the accompanying tables.

Samples within the scope of this invention exhibit flame spread ratings of up to 4 and a smoke extinguishing values (SEV) less than 100, preferably less than 20. Samples with SEV ratings of 20 or less do not generate significant amounts of visible smoke during combustion.

Prior art materials without additives typically exhibit SEV's greater than 1000, some up to 1500 and FSR values of at least 5.

The results obtained using the presence evaluation method correlate well with the results from other test methods that have been adopted as standards in the industry, such as the Steiner Tunnel, ASTM test E-84 (UL-910).

Table 1

| COMPOSITIONS WITH LOW SMOKE AND LOW FLAME SPREAD | | | | | | | |
|---|---|---|---|---|---|---|---|
| Sample | Base | Pt Cmpd. | ATH | Mg(OH)$_2$ | Quartz | SEV | FSR |
| 1* | A | 0.4 | 5 | 5 | 50 | 25 | 3.56 |
| 2* | A | 0.8 | 10 | 10 | 40 | 15 | 3.53 |
| 3 | D | 0.4 | 5 | 5 | 40 | 85 | 3.2 |
| 4 | B | 0.4 | 5 | 5 | 40 | 80 | 3.47 |
| 5 | A | 0.4 | 5 | 5 | 40 | 73 | 3.36 |
| 6 | B | 0.8 | 10 | 10 | 40 | 20 | 2.99 |
| 7 | B | 0.8 | 10 | 10 | 70 | 30 | 3.05 |
| 8 | B | 0.8 | 80 | 10 | 0 | 28 | 2.82 |
| 9 | B | 0.8 | 50 | 10 | 0 | 30 | 3.28 |
| 10 | C | 0.8 | 15 | 10 | 20 | 15 | 3.8 |
| 11 | C | 0.8 | 15 | 10 | 35 | 15 | 3.42 |
| 12 | C | 0.8 | 15 | 10 | 50 | 25 | 3.1 |
| 13 | C | 0.8 | 15 | 10 | 50(10u) | 25 | 3.31 |
| 14 | C | 0.8 | 15 | 10 | 50(30u) | 30 | 3.28 |
| 15 | C | 0.8 | 36 | 12.5 | 0 | 20 | 2.99 |
| 16 | C | 0.8 | 36 | 12.5 | 0 | 22 | 3.04 |
| 17 | C | 0.8 | 62 | 12.5 | 0 | 7 | 2.54 |
| 18 | C | 0.8 | 62 | 12.5 | 0 | 10 | 2.58 |
| 19 | C | 0.8 | 10 | 10 | 0 | 40 | 3.46 |
| 20 | C | 0.8 | 0 | 40 | 0 | 60 | 2.96 |

* - Composition contained 5 parts by weight of titanium dioxide (TiO$_2$)

The absence of a definable relationship between the rate of flame spread and the amount of smoke generated during combustion of a silicone rubber composition is evident from a comparison of samples 6 and 20, which have comparable flame spread ratings but differ in SEV ratings for smoke generation by a factor of 3.

Example 2

This example further demonstrates that the ability of an additive to reduce smoke evolution is not always synonymous with its ability to inhibit flame spread. When the additives of this invention are used in amounts such that the total concentration is less that 40 parts by weight per 100 parts of silicone rubber base the smoke evolution may be within the range of preferred compositions of this invention, however the rate of flame spread is typically significantly higher than the compositions listed in the preceeding Table 1. While the flame spread and SEV ratings of some compositions may be within the same range as the compositions of this invention, this is unpredictable and appears to vary with the composition of the particular sample.

Table 2

| Compositions With Low Smoke Evolution And High Flame Spread | | | | | | | | | |
|---|---|---|---|---|---|---|---|---|---|
| Sample | Base | Pt | ATH | MgO | Mg(OH)2 | Quartz | TiO2 | SEV | FSR |
| 21 | D | 0.4 | 5 | 0 | 5 | 0 | 0 | 75 | 5.02 |
| 22 | A | 0.4 | 5 | 0 | 5 | 0 | 0 | 80 | 4.85 |
| 23 | A | 0.4 | 5 | 0 | 5 | 0 | 0 | 70 | 5.1 |
| 24 | A | 0.4 | 5 | 0 | 0 | 0 | 5 | 93 | 4.98 |
| 25 | D | 0.4 | 5 | 2 | 0 | 0 | 0 | 70 | 4.36 |
| 26 | B | 0.4 | 5 | 0 | 5 | 0 | 5 | 53 | 5.29 |
| 27 | B | 0.4 | 5 | 0 | 0 | 0 | 5 | 73 | 5.2 |
| 28 | C | 0.8 | 5 | 0 | 5 | 15 | 0 | 40 | 4.76 |
| 29 | C | 0.8 | 10 | 0 | 10 | 0 | 0 | 15 | 4.82 |
| 30 | C | 1.5 | 10 | 0 | 19 | 0 | 0 | 25 | 4.42 |
| 31 | C | 0.8 | 19 | 0 | 1 | 0 | 0 | 55 | 4.98 |
| 32 | C | 1.5 | 10 | 0 | 10 | 0 | 0 | 80 | 4.64 |
| 33 | C | 1.5 | 10 | 0 | 1 | 0 | 0 | 20 | 5.52 |
| 34 | C | 0.8 | 10 | 0 | 10 | 0 | 0 | 25 | 5.26 |
| 35 | C | 0.8 | 1.0 | 0 | 19 | 0 | 0 | 52 | 4.58 |
| 36 | C | 1.5 | 19 | 0 | 10 | 0 | 0 | 13 | 5.4 |
| 37 | C | 0.8 | 19 | 0 | 19 | 0 | 0 | 18 | 4.33 |
| 38 | C | 0.8 | 10 | 0 | 10 | 0 | 0 | 20 | 5.06 |
| 39 | C | 0.8 | 14.5 | 0 | 10 | 0 | 0 | 15 | 5.3 |
| 40 | C | 0.8 | 14.5 | 0 | 10 | 0 | 2 | 30 | 4.68 |
| 41 | C | 0.8 | 14.5 | 0 | 10 | 0 | 6 | 20 | 4.53 |
| 42 | C | 0.8 | 14.5 | 0 | 10 | 0 | 10 | 10 | 4.8 |
| 43 | C | 0.8 | 14.5 | 0 | 12.5 | 0 | 0 | 20 | 5.01 |
| 44 | C | 0.8 | 10 | 0 | 10 | 0 | 0 | 30 | 4.66 |
| 45 | C | 0.8 | 10 | 0.4 | 0 | 8 | 4 | 35 | 5.07 |
| 46 | C | 0.8 | 10 | 0.4 | 8 | 0 | 0 | 30 | 5.13 |
| 47 | C | 0.8 | 10 | 0 | 10 | 8 | 0 | 0 | 5.24 |
| 48 | C | 0.3 | 10 | 0.4 | 0 | 8 | 4 | 60 | 4.36 |
| 49 | C | 0.3 | 10 | 0 | 10 | 8 | 0 | 25 | 4.86 |
| IC | C | 0.4 | 20 | 20 | 0 | 8 | 0 | 50 | 3.96 |

Sample 1C represents the upper limits for the concentrations of hydrated alumina and magnesium oxide that are defined in U.S. Patent No. 4,288,360 discussed in the prior art section of this specification.

**Claims**

1. In a peroxide-curable silicone elastomer composition comprising a silica-reinforced polydiorgano-siloxane gum, an aromatic peroxide or peroxyester and an amount of a platinum-group metal or compound thereof sufficient to impart flame retardancy to cured elastomers prepared from said composition, the improvement characterized by the presence in said composition of at least 40 parts by weight, per 100 parts by weight of said gum, of an additive to reduce both the flame spread rate and the amount of smoke generated during combustion of the elastomer, said additive being selected from
A. hydrated alumina,
B. at least one magnesium compound, C. mixtures of hydrated alumina and at least one magnesium compound, and
D. mixtures of A, B or & and finely divided quartz,
where the combined concentrations of A and 8 is at least 10 parts by weight per 100 parts by weight of said gum.

2. A composition according to claim 1 where said platinum-group metal compound is selected from chloroplatinic acid and complexes of chloroplatinic acid with organic and organosilicon compounds containing ethylenically unsaturated hydrocarbon radicals, the concentration of platinum is at least 20 part per million parts by weight of said gum and the concentration of said additive is from 40 to 90 parts by weight per 100 parts by weight of said gum.

3. A method for decreasing the amount of smoke evolved during combustion of elastomers prepared from curable compositions comprising a silica-filled polydiorganosiloxane gum, an aromatic peroxide or peroxyester and an amount of a platinum-group metal or compound thereof sufficient to impart flame retardancy to cured elastomers prepared from said composition, said method comprising blending into said curable composition at least 40 parts by weight per 100 parts by weight of said gum of an additive to reduce the rate of flame spread and the amount of smoke generated during combustion of the elastomer, said additive being selected from

A. hydrated alumina,

B. at least one magnesium compound,

C. mixtures of hydrated alumina and at least one magnesium compound, and

D. mixtures of A, B or D and finely divided quartz, where the combined concentrations of A and B is at least 10 parts by weight.

4. A method according to claim 3 where said platinum-group metal compound is selected from chloroplatinic acid and complexes of chloroplatinic acid with organic and organosilicon compounds containing ethylenically unsaturated hydrocarbon radicals and the concentration of said additive is form 40 to 90 parts by weight per 100 parts by weight of said gum.